# EUROPÄISCHE PATENTSCHRIFT

(11) **EP 1 393 511 B1**
(45) Veröffentlichungstag und Bekanntmachung des Hinweises auf die Patenterteilung: **07.12.2005**
(21) Anmeldenummer: 02747178.8
(22) Anmeldetag: 29.05.2002
(51) Int. Cl.: H04L 12/56, H04Q 7/22

(54) **VERFAHREN ZUR VERRINGERUNG DER LATENZZEIT BEI DER ÜBERTRAGUNG VON INFORMATIONEN IN EINEM GPRS-NETZWERK**
METHOD FOR REDUCING THE LATENCY DURING THE TRANSMISSION OF INFORMATION IN A GPRS NETWORK
PROCEDE POUR REDUIRE LE TEMPS DE LATENCE LORS DE LA TRANSMISSION D'INFORMATIONS DANS UN RESEAU GPRS

(30) Priorität: 31.05.2001 DE 10126709
(43) Veröffentlichungstag der Anmeldung: 03.03.2004
(73) Patentinhaber: T-Mobile Deutschland GmbH, 53227 Bonn (DE)
(72) Erfinder: HAKE, Jens, 09235 Burkhardtsdorf OT Kemtau (DE)
(74) Vertreter: Riebling, Peter
(86) Internationale Anmeldenummer: PCT/DE2002/001978
(87) Internationale Veröffentlichungsnummer: WO 2002/098068

(56) Entgegenhaltungen:
- EP-A- 1 150 456
- WO-A-98/24250
- GB-A- 2 349 551
- "EFFICIENT TDMA-BASED WIRELESS LAN MAC PROTOCOL FOR LATENCY SENSITIVE STRAFFIC" IBM TECHNICAL DISCLOSURE BULLETIN, IBM CORP. NEW YORK, US, Bd. 37, Nr. 12, 1. Dezember 1994 (1994-12-01), Seiten 543-544, XP000487883 ISSN: 0018-8689
- KALDEN R ET AL: "WIRELESS INTERNET ACCESS BASED ON GPRS" IEEE PERSONAL COMMUNICATIONS, IEEE COMMUNICATIONS SOCIETY, US, Bd. 7, Nr. 2, April 2000 (2000-04), Seiten 8-18, XP000920359 ISSN: 1070-9916

## Beschreibung

Der General Packet Radio Service, kurz GPRS, ist ein neuer Standard in der drahtlosen Datenübertragung, der auf dem bisherigen GSM-Mobilfunkstandard basiert. Eine detaillierte Beschreibung des GPRS-Standards findet sich in: GSM Technical Specification 03.60: Digital Cellular Telecommunications System (Phase 2+), General Packet Radio Service; Service Description, Stage 2; herausgegeben vom European Telecommunications Standards Institute (ETSI) am 27. Februar 1997.

GPRS basiert ähnlich wie das TCP/IP-Protokoll auf der Vermittlung einzelner Datenpakete und sendet nicht auf einem kontinuierlichen Datenstrom. Diese Datenpakete können getrennt voneinander an den Empfänger übertragen und von diesem wieder zusammengesetzt werden. So lassen sich die zur Verfügung stehenden Bandbreiten besser ausnutzen.

Bei GPRS ist die Übertragung von Daten zwischen einem Sender und einem oder mehreren Empfängern möglich. Dabei können Sender und Empfänger mobile Geräte oder einfache Datenendeinrichtungen sein. Datenendeinrichtungen sind Systeme wie, Mobiltelefone, Personal Computer oder auch Barcodescanner, die via Kabel mit dem Netzwerk verbunden ist. Bei GPRS teilen sich alle Teilnehmer die in einer GSM-Funkzelle zur Verfügung stehende Übertragungskapazität; belegt ist die Funkschnittstelle nur, wenn wirklich Datenpakete übermittelt werden. Das heißt, die Funkverbindung wird für jede Datenübertragung aufgebaut und wieder abgebaut, sowohl für eine Übertragung im Uplink, d.h. von einem Sender über das Mobilfunknetz zu einem Empfänger, als auch im Downlink, d.h. vom Empfänger über das Mobilfunknetz zurück zum Sender. Die Datenübertragung erfolgt dabei unidirektional.

Die Steuerung der Datenpakete im Netzwerk erfolgt über sogenannte GPRS Support Nodes (GSN) und Packet Control Units (PCU), die in Netzelementen des GSM-Mobilfunknetzes eingerichtet sind. Diese GSNs sind ferner für das Roaming als auch für die Gateway-Funktion zu anderen Kommunikationsnetzen verantwortlich.
Eine dynamische Ressourcenvertellung im GSM-GPRS-Funknetz gewährleistet das reibungslose Nebeneinander von durchschaltevermittelten Kanälen (GSM) und paketvermittelten Kanälen (GPRS) im selben Kommunikationsnetz.

Im derzeitigen GPRS-Netz ist die große Latenzzeit bei Datenübertragungen ein zentrales Problem und vermindert die Performance von Internetanwendungen erheblich. Eine einfache Datentransaktion kann im GPRS-Netz 2-3 s dauern. Die gleiche Transaktion über einen leitungsvermittelten Datendienst ist erheblich schneller und liegt im Bereich von 500-700 ms.

Die hohe Latenzzeit bei Datenübertragungen über das GPRS-Netz verursacht erhebliche Performanceeinschränkungen bei Internetanwendungen wie WAP oder Internet-Browsern, da diese Anwendungen im Prinzip immer darauf basieren, daß eine Teilnehmereinheit (Client) durch Senden einer Anforderung über das GPRS-Netz Informationen von einer datenbereitstellenden Einrichtung (Server) abfordert. Die Rückübertragung der Daten erfolgt mit der oben angesprochenen Latenzzeit von 2-3 s.

Das Dokument GB 2 349 551 A offenbart ein mobiles Endgerät mit Browser-Funktionalität, welches als Client über ein drahtloses Netzwerk mittels des WAP-Dienstes Informationen von einem Server z.B. im Internet abrufen kann. Dabei erfolgt eine Protokollanpassung (WAP-WML <---> WWW-HTML) in einem zwischengeschalteten Protokoll-Gateway.

Das Dokument XP-487883 "Efficient TDMA-based Wireless LAN MAC Protocol for Latency Sensitive Traffic", IBM Technical Disclosure Bulletin, Vol. 37, No. 12, Dezember 1994, Seiten 543-544, offenbart einen Scheduler, der in einem TDMA-basierten System den Anteil von Downlink- und Uplink-Zeitschlitzen in einem Zeitrahmen derart steuert, dass verzögerungssensitiver Verkehr optimal übertragen wird.

Die Aufgabe der Erfindung besteht darin, die Latenzzeit bei der Übertragung von Informationen in einem GPRS-Netzwerk zu verringern, insbesondere aber die Zustellzeit für die durch einen Client von einem Server abgeforderten Daten zu verkürzen.

Diese Aufgabe wird erfindungsgemäß durch die Merkmale des Patentanspruchs 1 gelöst. Vorteil hafte Weiterbildungen sind den abhängigen Ansprüchen zu entnehmen.
Die Erfindung beruht auf der Überlegung, dass die Wahrscheinlichkeit recht hoch ist, dass nach dem Senden von Datenpaketen von einem Client über das GPRS-Netzwerk an einen Server sehr kurz darauf Daten vom Server zum Client übertragen werden müssen.

Um die Latenzzeit bei einer Datentransaktionen deutlich zu senken, wird erfindungsgemäß vorgeschlagen, in das Basisstationssystem (BSS) des GSM-Mobilfunknetzes eine Funktion zu integrieren, die den Kommunikationskanal für die Rückübertragung von Informationen vom Server zum Client bereits öffnet bevor der Kommunikationskanal für die Hinübertragung von Informationen vom Client zum Server geschlossen wird. Dieses Verfahren betrifft demnach insbesondere den Teil des Datenkanals, der durch die Luftschnittstelle zwischen einer mobilen Funk-Teilnehmereinheit, z.B. einem Mobiltelefon, und einer Basisstation des GSM-Mobilfunknetzwerkes gebildet wird.

Anders ausgedrückt wird während der Laufzeit einer sogenannten Uplink-Datenkanal (UL-TBF), der das Senden von Daten an einen Server durch den Client über das GPRS-Netz ermöglicht, von der Basisstation bereits präventiv einen sogenannter Downlink-Datenkanal (DL-TBF) eröffnet, der den Empfang von Daten vom Server durch den Client über das GPRS-Netz ermöglicht.

Dieser präventiv eröffnete Downlink-Datenkanal bleibt vorzugsweise nur eine bestimmten Zeit, z.B. 300-2000 ms, nach dem Schließen des Uplink-Datenkanals aktiv geöffnet, um einerseits die vom Server für den Client eintreffenden Daten schnellstmöglich zustellen zu können und andererseits die Funkressourcen zu schonen, falls wider erwarten keine Übertragung von Daten zwischen dem Server und dem Client stattfindet. Vorzugsweise beträgt die Zeitspanne jedoch 500-1000 ms.

Mit einer solchen zusätzlich Funktion lassen sich bei Einsatz minimaler Ressourcen auf der Luftschnittstelle erhebliche Verbesserungen im Bereich der Latenzzeit erzielen. Für die Teilnehmer wird eine merkliche Performancesteigerung bemerkbar werden.

Zur Durchführung des Verfahrens sind technischen Veränderungen bei den Packet Control Units (PCUs) notwendig, die in den Basisstationssystemen (BSS), vorzugsweise den Basisstationssteuereinrichtungen (BSC), des Mobilfunknetzes eingerichtet sind. Die PCU nimmt Einfluss auf die BSC, welche die benötigten Funkressourcen, sprich Funkkanäle, zeitlich abgestimmt bereitstellt.

Bei Anwendungen des Verfahrens ergebt sich zwangsläufig ein höherer Verbrauch an Funkkanal-Ressourcen, da bereits präventiv Funkkanäle zur Rückübertragung von Daten bereitgehalten werden. Um diesen Ressourcenverbrauch möglichst klein zu halten ist vorgesehen, dass der Downlink-Funkkanal erst dann geöffnet wird, wenn das letzte Datenpaket über den Uplink-Funkkanal gesendet wurde.

Nach dem Senden des letzten Datenpaketes wird der Uplink-Funkkanal gemäß GPRS-Spezifikation noch für eine bestimmte Zeitspanne offen gehalten. Diese Zeitspanne wird durch ein Zeitglied gesteuert und als Countdown-Prozedur bezeichnet.
Dies kann erfindungsgemäß ausgenutzt werden, indem der Downlink-Funkkanal erst dann geöffnet wird, wenn die Countdown-Prozedur sich ihrem Ende nähert.

Ein Ausführungsbeispiel der Erfindung wird anhand der Zeichnungsfigur 1 näher erläutert.

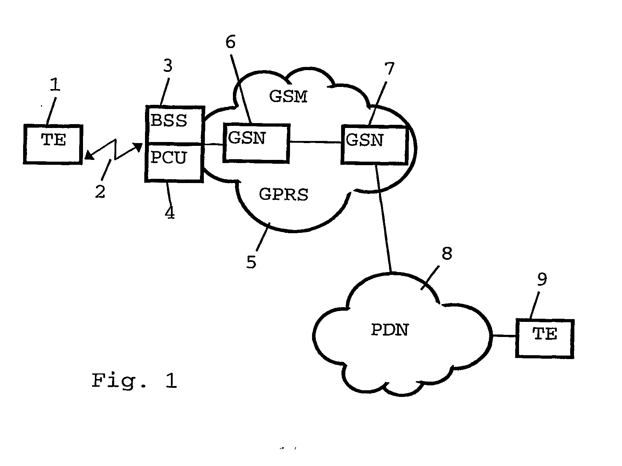

Figur 1 zeigt eine Teilnehmereinheit 1, die z.B. in Form eines Mobiltelefons ausgebildet sein kann. Die Teilnehmereinheit 1 tritt als Client auf und möchte von einer anderen Teilnehmereinheit 9, die einen Server darstellt, Informationen über ein GPRS-Netz 5 abrufen.

Das GPRS-Netz 5 ist Teil eines GSM-Mobilfunknetzes. Die Teifnehmereinheit 1 nimmt über die Luftschnittstelle 2 als Teil eines Kommunikationskanals Verbindung zum Basisstationssystem 3 des Mobilfunknetzes 5 auf und übermittelt die Anforderung von Informationen mittels Datenpaketen an das Basisstationssystem und von dort an eine Packet Control Unit 4. Die PCU 4 nimmt die Datenpakete entgegen und leitet sie an einen GPRS Support Node GSN 6 weiter. Über einen oder mehrere weitere GSN 7 wird eine Verbindung zu dem betreffenden Datennetzwerk PDN 8, z.B. dem Internet, hergestellt, an das der Server 9 angebunden ist. Die angeforderten Daten werden vom Server 9 bereitgestellt und auf umgekehrtem Wege in Form von Datenpaketen über einen anderen Kommunikationskanal an den Client 1 übertragen.

Für die Anforderung der Daten wird zwischen Client 1 und Basisstationssystem 3 und letztlich dem Server 9 temporär ein Kommunikationskanal über die Luftschnittstelle 2 geöffnet und nach Übertragung der Anforderung wieder geschlossen. Erfindungsgemäß wird nun präventiv ein voraussichtlich benötigter Kommunikationskanal für die Rückübertragung von Informationen vom Server 9 zum Client 1 geöffnet, bevor der erste Kommunikationskanal geschlossen wird.

## Patentansprüche

1. Verfahren zur Verringerung der Latenzzeit bei der Datenübertragung auf der Luftschnittstelle (2) eines Basisstationssystems (3) in einem GPRS Netzwerk (5), über welches Informationen in Form von Datenpaketen zwischen einer datenanfordernden Einheit, Client (1), und einer datenbereitstellenden Einheit, Server (9), übertragen werden wobei für die Übertragung der Datenpakete vom Client (1) an den Server (9) mindestens ein erster Kommunikationskanal durch Zuweisung eines Temporary Block Flow - TBF geöffnet und wieder geschlossen wird und nachfolgend für eine Übertragung von Informationen vom Server (9) an den Client (1) mindestens ein zweiter Kommunikationskanal durch Zuweisung eines TBF geöffnet und wieder geschlossen wird,
**dadurch gekennzeichnet,**
**dass** der zweite Kommunikationskanal präventiv bereits vor dem Schließen des ersten Kommunikationskanals geöffnet wird.

2. Verfahren nach Anspruch 1, **dadurch gekennzeichnet, dass** die Datenpakete über Funkkanäle des GPRS-Mobilfunknetzwerkes (5) übertragen werden, welche Teil der Kommunikationskanäle sind.

3. Verfahren nach einem der vorhergehenden Ansprüche, **dadurch gekennzeichnet, dass** der zweite Kommunikationskanal nur für eine vorbestimmte Zeit nach dem Schließen des ersten Kommunikationskanals geöffnet bleibt.

4. Verfahren nach Anspruch 3, **dadurch gekennzeichnet, dass** die vorbestimmte Zeit 300 bis 2000 ms beträgt.

5. Verfahren nach einem der vorhergehenden Ansprüche, **dadurch gekennzeichnet, dass** der zweite Kommunikationskanal erst dann geöffnet wird, wenn das letzte Datenpaket über den ersten Kommunikationskanal gesendet wurde.

6. Verfahren nach einem der vorhergehenden Ansprüche, **dadurch gekennzeichnet, dass** der zweite Kommunikationskanal geöffnet wird, bevor eine im ersten Kommunikationskanal durchgeführte Countdown-Prozedur beendet ist.

## Claims

1. Method for reducing the latency period in data transmission on the air interface (2) of a base station system (3) in a GPRS network (5) via which information in the form of data packets is transmitted between a data-requesting unit, client (1), and a data-providing unit, server (9), wherein for transmission of the data packets from the client (1) to the server (9) at least one first communications channel is opened and closed again by allocation of a temporary block flow (TBF), and subsequently for transmission of information from the server (9) to the client (1) at least one second communications channel is opened and closed again by allocation of a TBF, **characterised in that** the second communications channel is already opened preventively before closing the first communications channel.

2. Method according to claim 1, **characterised in that** the data packets are transmitted via radio channels of the GPRS mobile telephone network (5), which channels form part of the communications channels.

3. Method according to one of the preceding claims, **characterised in that** the second communications channel remains open only for a predetermined time after closing the first communications channel.

4. Method according to claim 3, **characterised in that** the predetermined time is 300 to 2000 ms.

5. Method according to one of the preceding claims, **characterised in that** the second communications channel is only opened when the last data packet has been sent via the first communications channel.

6. Method according to one of the preceding claims, **characterised in that** the second communications channel is opened before a countdown procedure carried out in the first communications channel is over.

## Revendications

1. Procédé pour réduire le temps d'attente lors de la transmission de données sur l'interface (2) d'un système de station de base (3) dans un réseau GPRS (5) par l'intermédiaire duquel des informations sont transmises sous forme de paquets de données entre une unité de demande de données, le client (1), et une unité de fourniture de données, le serveur (2), étant précisé que pour la transmission des paquets de données du client (1) vers le serveur (9), au moins un canal de communication s'ouvre et se referme grâce à l'affectation d'un flux de blocs temporaire TBF, puis pour une transmission d'informations du serveur (9) vers le client (1), au moins un second canal de communication s'ouvre et se referme grâce à l'affectation d'un TBF, **caractérisé en ce que** le second canal de communication s'ouvre à titre préventif avant même la fermeture du premier canal de communication.

2. Procédé selon la revendication 1, **caractérisé en ce que** les paquets de données sont transmis par l'intermédiaire de canaux radio du réseau de téléphone mobile GPRS (5) qui font partie des canaux de communication.

3. Procédé selon l'une des revendications précédentes, **caractérisé en ce que** le second canal de communication ne reste ouvert que pour une durée prédéfinie après la fermeture du premier.

4. Procédé selon la revendication 3, **caractérisé en ce que** la durée prédéfinie est de 300 à 2000 ms.

5. Procédé selon l'une des revendications précédentes, **caractérisé en ce que** le second canal de communication ne s'ouvre que lorsque le dernier paquet de données a été envoyé par l'intermédiaire du premier.

6. Procédé selon l'une des revendications précédentes, **caractérisé en ce que** le second canal de communication s'ouvre avant qu'une procédure de compte à rebours exécutée dans le premier soit terminée.
